# EUROPEAN PATENT SPECIFICATION

(11) **EP 1 611 203 B1**
(45) Date of publication and mention of the grant of the patent: **06.04.2011**
(21) Application number: 04726300.9
(22) Date of filing: 07.04.2004
(51) Int. Cl.: C08L 83/04

(54) **CURABLE ORGANOPOLYSILOXANE RESIN COMPOSITION FOR OPTICAL TRANSMISSION COMPONENTS, OPTICAL TRANSMISSION COMPONENTS, AND FABRICATION PROCESS THEREOF**
VERNETZBARE ORGANOPOLYSILOXANHARZZUSAMMENSETZUNG FÜR OPTISCH LEITFÄHIGE KOMPONENTE, OPTISCH LEITFÄHIGE KOMPONENTE UND DEREN HERSTELLUNGSVERFAHREN
COMPOSITION DE RESINE ORGANOPOLYSILOXANE DURCISSABLE POUR COMPOSANTS DE TRANSMISSION OPTIQUE, COMPOSANTS DE TRANSMISSION OPTIQUE ET PROCEDE DE FABRICATION ASSOCIE

(30) Priority: 07.04.2003 JP 2003103252; 05.06.2003 JP 2003160302
(43) Date of publication of application: 04.01.2006
(73) Proprietor: Dow Corning Corporation, Midland, Michigan 48686-0994 (US)
(72) Inventor: KUSHIBIKI, Nobuo, 2510875, Kanagawa (JP); OGAWA, Takuya, 2610012, Chiba (JP); TAKEUCHI, Kikuko, 2500124, Kanagawa (JP)
(74) Representative: Polypatent
(86) International application number: PCT/JP2004/005014
(87) International publication number: WO 2004/090041

(56) References cited:
- EP-A- 0 682 271
- US-A- 3 948 848
- US-A- 4 198 131

## Description

### Technical Field

The present invention relates to an optical waveguide comprising a hydrosilation-cured product of an organopolysiloxane resin, and relates to a process for fabricating an optical waveguide.

### Background of the Invention

Quartz and glass are used not only as optical fiber materials, but also, being high-reliability materials, as materials for optical communication elements as well. However, such inorganic materials require high-temperature treatment and have inferior productivity characteristics, which creates demand for organic materials for optical communication elements possessing sufficient processability and durability. The most reliable materials are polyimides, which are widely used as materials for electronic components.

On the other hand, due to their optical transparency, electrical insulation properties, photostability, thermal stability, etc., organopolysiloxane-based materials have also attracted considerable attention in the field of optoelectronics. Among the physical properties required for optical communication element materials, particular importance is emphasized about the optical characteristics, such as absence of absorption at the 1300 to 1660 nm telecommunication wavelength range and absence of birefringence due to polymer chain orientation, as well as high moisture resistance, low water pick-up, and heat resistance during device assembly. Improvement in the above-described characteristics is in progress focusing primarily on polyimides and organopolysiloxane-based materials.

In Japanese Patent Application Publication No. Sho 63-217306, a silicone rubber was offered as a cured product of organopolysiloxane for use in optical waveguides, and an easily deformable organopolysiloxane elastomer was offered as a cured product of organopolysiloxane for use in optical waveguides in Japanese Patent Application Publication No. Hei 1-131505. A liquid addition-curable silicone rubber containing a silica filler has been offered for use as an optical transmission material in Japanese Patent Application Publication No. Hei 11-43605. However, silicone rubbers and organopolysiloxane elastomers, in view of their molecular structure, exhibit considerable changes in their refractive indices and other optical characteristics following changes in ambient temperature, in other words, they have problems in terms of temperature change stability and heat resistance.

Japanese Patent Application Publication No. Hei 3-43423 offers an organopolysiloxane resin (an organopolysiloxane resin comprising monoorganosiloxane units and diorganosiloxane units) obtained by hydrolytic co-condensation of a diorganodichlorosilane and an organotrichlorosilane having deuterated alkyl or halogenated alkyl groups, as well as an organopolysilsesquioxane obtained by hydrolytic condensation of an organotrichlorosilane having deuterated alkyl or halogenated alkyl groups. Taking into consideration the high optical transmissivity of organopolysiloxane, Japanese Patent Application Publication No. Hei 4-157402 provides an organopolysiloxane resin having hydrocarbon groups without deuteron substitution or halogen substitution. Japanese Patent Application Publication No. Hei 9-124793 offers an epoxy-containing phenylpolysiloxane resin obtained by the hydrolytic co-condensation of phenyltrichlorosilane and diphenyldichlorosilane in the presence of an epoxy-containing alcohol.

However, such organopolysiloxane resins, although possessing superior optical characteristics at normal temperatures, are of the types that cure by dehydration condensation of silanol groups, and, as a result, do not sufficiently cure without heating at an elevated temperature for an extended period of time, and when an optical transmission component, such as an optical waveguide, is exposed to elevated temperatures (e.g., about 260°C) during fabrication of an optical communication device, etc., further dehydration condensation takes place, resulting in changes in optical characteristics.

In Japanese Patent Application Publication No. Hei 9-124793, UV curing is implemented by adding a photocuring catalyst to an epoxy-containing phenylpolysiloxane resin, however, such addition leads to problems including increased absorption of communication light and a tendency towards scattering.

Incidentally, an optical waveguide is made up of two types of materials with different refractive indices called a core and a cladding. The difference in their refractive indices depends on the design of the optical waveguide, but it is said that the refractive index of the core has to be about 0.1 % to 5% higher than the refractive index of the cladding in order for light to propagate through the core. In case of a dehydration condensation-curable organopolysiloxane resin, the refractive index difference is regulated by the amount of introduced fluorinated hydrocarbon groups which contribute to a reduction in the refractive index. For instance, Japanese Patent Application Publication No. 2000-230052 offers an organopolysilsesquioxane having fluorinated hydrocarbon groups, but the problem with this approach, however, consists in the increased cost of the material due to the introduction of the fluorinated hydrocarbon groups.

It is an object of the present invention to provide an optical waveguide comprising a cured product of organopolysiloxane resin that has low temperature dependence of the refractive index, high heat resistance, high transparency at the telecommunication wavelength region without introducing deuterated alkyl groups and fluorinated hydrocarbon groups, possesses elasticity and hardness that makes it difficult to deform, and permits easy adjustment of the refractive index difference during the preparation of the core material and cladding material.

Furthermore, it is an object of the invention to provide a simple and economical process for fabricating an optical waveguide comprising a cured product of organopolysiloxane resin that that has low temperature dependence of the refractive index, high heat resistance, high transparency at the telecommunication wavelength region without introducing deuterated alkyl groups and fluorinated hydrocarbon groups, possesses elasticity and hardness that makes it difficult to deform, and permits easy adjustment of the refractive index difference during the preparation of the core material and cladding material.

### Summary of the Invention

The inventors arrived at the present invention as a result of in-depth investigations aimed at resolving the above-mentioned problems. Namely, the present invention relates to the following;

[1] An optical waveguide comprising a hydrosilation-cured product of (A) an organopolysiloxane resin, which is represented by an average unit formula (1):

   (R¹₃SiO_{1/2})ₐ(R²₂SiO_{2/2})_{b}(R³SiO_{3/2})_{c}(SiO_{4/2})_{d} (1)

   (wherein R¹, R², and R³ stand for one, two, or more kinds of monovalent hydrocarbon groups selected from monovalent aliphatic hydrocarbon groups having 1 to 6 carbon atoms and monovalent aromatic hydrocarbon groups having 6 to 10 carbon atoms, 0<a≤0.5, 0≤b<0.2, 0.3≤c<1, 0≤d≤0.4, 0≤(b+d)/(a+c)≤0.25, and a+b+c+d=1) and has three or more monovalent unsaturated aliphatic hydrocarbon groups per molecule, with not less than 10 mol% of the monovalent hydrocarbon groups being monovalent aromatic hydrocarbon groups, and (B) an organosilicon compound having two or more silicon-bonded hydrogen atoms per molecule, with not less than 5 mol% of all the silicon-bonded monovalent substituent groups being monovalent aromatic hydrocarbon groups.
[2] An optical waveguide comprising a hydrosilation-cured product of (A) an organopolysiloxane resin, which is represented by an average unit formula (1):

   (R¹₃SiO_{1/2})ₐ(R²₂SiO_{2/2})_{b}(R³SiO_{3/2})_{c}(SiO_{4/2})_{d} (1)

   (wherein R¹, R², R³, a, b, c, d, (b+d)/(a+c), and a+b+c+d are the as described above) and has three or more monovalent unsaturated aliphatic hydrocarbon groups per molecule, with not less than 10 mol% of the monovalent hydrocarbon groups being monovalent aromatic hydrocarbon groups, (B) an organosilicon compound having two or more silicon-bonded hydrogen atoms per molecule, with not less than 5 mol% of all the silicon-bonded monovalent substituent groups being monovalent aromatic hydrocarbon groups, and (d2) a hydrosilation-reactive organosiloxane-based diluent.
[3] The optical waveguide according to [1], wherein both the cladding and the core of the optical waveguide consist of a hydrosilation-cured product of component (A) and component (B), with the refractive index of the core being at least 0.1 % higher than the refractive index of the cladding.
[4] The optical waveguide according to [2], wherein both the cladding and the core of the optical waveguide consist of a hydrosilation-cured product of component (A), component (B), and component (d2), with the refractive index of the core being at least 0.1% higher than the refractive index of the cladding.
[5] The optical waveguide according to [3], wherein the refractive index difference is regulated by making the total content of monovalent aromatic hydrocarbon groups in component (A) and component (B) used for the core higher than the total content of monovalent aromatic hydrocarbon groups in component (A) and component (B) used for the cladding.
[6] The optical waveguide according to [4], wherein the refractive index difference is regulated by making the total content of monovalent aromatic hydrocarbon groups in component (A), component (B), and component (d2) used for the core higher than the total content of monovalent aromatic hydrocarbon groups in component (A), component (B), and component (d2) used for the cladding.
[7] The optical waveguide according to any of [1], [2]**,** [3] to [6], which has a film-like shape.
[8] A process for fabricating an optical waveguide, wherein the curable organopolysiloxane resin composition for optical waveguides as defined in any of [1] and [2] is cured by heating.
[9] A process for fabricating an optical waveguide, wherein the curable organopolysiloxane resin composition for optical waveguides as defined in any of [1] to [2] is applied to a substrate and cured by heating.
[10] A process for fabricating a slab optical waveguide, in which a curable organopolysiloxane resin composition for optical waveguides (1) as defined in any of [1] and [2] is applied to a substrate and cured by heating, a curable organopolysiloxane resin composition for optical waveguides (2), whose cured product has a refractive index at least 0.1% higher than that of the above-mentioned composition (1), is applied to the cured product thereof and cured by heating, and then the aforementioned composition (1) is applied to the cured product thereof and cured by heating.
[11] A process for fabricating an optical waveguide, wherein the curable organopolysiloxane resin composition for optical waveguides as defined in any of [1] and [2] is cast into a mold having a desired inner surface shape and cured by heating.
[12] A process for fabricating an optical waveguide, wherein ① a curable organopolysiloxane resin composition for optical waveguides (3) as defined in any of [1] and [2] is cast into a mold having on its inner surface protrusions corresponding to the core and cured by heating, ② the molding is removed from the mold, ③ a curable organopolysiloxane resin composition for optical waveguides (4) as defined in any of [1] and [2] whose cured product has a refractive index at least 0.1 % higher than that of the aforementioned composition (3), is cast into the hollow portion of the cured product removed from the mold and cured by heating, whereupon ④ the aforementioned composition (3) is applied on top of the cured product of the aforementioned composition (4) and the cured product of the aforementioned composition (3) and cured by heating.

### Brief Description of the Drawings

FIG. 1 is a cross-sectional view of the slab type optical waveguide of Example 3.
FIG. 2 is a cross-sectional view of the mold used in the process of fabrication of the channel type optical waveguide of Example 4.
FIG. 3 is a cross-sectional view of the mold used in the process of fabrication of the channel type optical waveguide of Example 4.
FIG. 4 is a cross-sectional view of the mold used in the process of fabrication of the channel type optical waveguide of Example 4.
FIG. 5 is a cross-sectional view of the mold used in the process of fabrication of the channel type optical waveguide of Example 4.
FIG. 6 is a cross-sectional view of the mold used in the process of fabrication of the channel type optical waveguide of Example 4.
FIG. 7 is a cross-sectional view of the mold used in the process of fabrication of the channel type optical waveguide of Example 4.
FIG. 8 is a cross-sectional view of the channel type optical waveguide of Example 4.

The reference numerals in the drawings are as follows;
A is Slab type optical waveguide,
B is Channel type optical waveguide,
1 is Cured product of composition 5,
2 is Cured product of composition 3,
3 is First mold,
4 is Protrusion,
5 is Composition 4 (does not contain toluene),
6 is Second mold,
7 is Cured product of composition 4 (does not contain toluene),
8 is Hollow portion,
9 is Cured product of composition 3 (does not contain toluene), and
10 is Third mold.

### Best Mode for Carrying Out the Invention

In the curable organopolysiloxane resin composition for optical waveguides of the present invention, monovalent unsaturated aliphatic hydrocarbon groups of component (A) and silicon-bonded hydrogen atoms of component (B), or monovalent unsaturated aliphatic hydrocarbon groups of component (A) and component (d2) and silicon-bonded hydrogen atoms of component (B) are crosslinked and cured by a hydrosilation reaction under the action of component (C).

As component (A) is represented by an average unit formula (1)

(R¹₃SiO_{1/2})ₐ(R₂SiO_{2/2})_{b}(R³SiO_{3/2})_{c}(SiO_{4/2})_{d} (1)

(wherein R¹, R², and R³ stand for one, two, or more kinds of monovalent hydrocarbon groups selected from monovalent aliphatic hydrocarbon groups having 1 to 6 carbon atoms and monovalent aromatic hydrocarbon groups having 6 to 10 carbon atoms, 0<a≤0.5, 0≤b<0.2, 0.3≤c<1, 0≤d<0.4, 0≤(b+d)/(a+c)≤0.25, and a+b+c+d=1), a and c are never zero, but b and d may be equal to zero, which is why unit R¹₃SiO_{1/2} and unit R³SiO_{3/2} are essential units while unit R²₂SiO_{2/2} and unit SiO_{4/2} are optional units.

Therefore, there can be organopolysiloxane resins comprising the following units. (R¹₃SiO_{1/2})ₐ(R³SiO_{3/2})_{c}, (R¹₃SiO_{1/2})ₐ(R²SiO_{2/2})_{b}(R³SiO_{3/2})_{c}, (R¹₃SiO_{1/2})ₐ(_{R}³SiO_{3/2})_{c}(SiO_{4/2})_{d}, and (R¹₃SiO_{1/2})ₐ(R²₂SiO_{2/2})_{b}(R³SiO_{3/2})_{c}(SiO_{4/2})_{d}.
However, too many units R¹₃SiO_{1/2} bring about a decrease in the molecular weight, which is why 0<a≤0.5, and preferably, 0<a≤0.3. Too few units R³SiO_{3/2} bring about a decrease in the degree of branching, which is why 0.3≤c<1, and preferably, 0.5≤c<1.
While introducing units R²₂SiO_{2/2} into the organopolysiloxane resin generally results in an increase in the elasticity of the resin, this can cause a decrease in its thermal deformation temperature and is an important factor affecting shape changes. For this reason, 0≤b<0.2, and preferably 0≤b<0.1. On the other hand, introduction of SiO_{4/2} units results in a significant increase in the hardness of the resin, and the resin tends to become brittle. Thus, 0≤d≤0.4 and 0≤(b+d)/(a+c)≤0.25.

Monovalent aliphatic hydrocarbon groups having 1 to 6 silicon-bonded carbon atoms include methyl, ethyl, propyl, butyl, hexyl, and other monovalent saturated aliphatic hydrocarbon groups, as well as vinyl, allyl, hexenyl, and other monovalent unsaturated aliphatic hydrocarbon groups. Silicon-bonded monovalent aromatic hydrocarbon groups are exemplified by phenyl, tolyl, xylyl, and naphthyl. Said monovalent aliphatic hydrocarbon groups are preferably methyl, said monovalent unsaturated aliphatic hydrocarbon groups preferably vinyl, and said monovalent aromatic hydrocarbon groups are preferably phenyl. In the organopolysiloxane resin, 10 mol% or more of its silicon-bonded monovalent hydrocarbon groups have to be monovalent aromatic hydrocarbon groups. Less than 10 mol% brings about a decrease in transmittance in the communication wavelength region of the cured product of the organopolysiloxane resin.

When an organopolysiloxane resin is used for the core section in an optical waveguide consisting of a core and cladding, monovalent aromatic hydrocarbon groups preferably comprise 20 mol% or more. The refractive index, which is an important optical characteristic, is adjusted by changing the type of the monovalent hydrocarbon groups. Using substituent groups consisting mainly of methyl and other monovalent aliphatic hydrocarbon groups tends to make the refractive index less than 1.5, and using substituent groups consisting mainly of phenyl and other monovalent aromatic hydrocarbon groups tends to make the refractive index higher than 1.5.

Organopolysiloxane resin consisting of (PhSiO_{3/2}) and (Me₂ViSiO_{1/2}) units, organopolysiloxane resin consisting of (PhSiO_{3/2}), (Me₂SiO_{2/2}), and (Me₂ViSiO_{1/2}) units, organopolysiloxane resin consisting of (PhSiO_{3/2}), (MeSiO_{3/2}), and (Me₂ViSiO_{1/2}) units, organopolysiloxane resin consisting of (PhSiO_{3/2}), (MeSiO_{3/2}), (Me₂ViSiO_{1/2}), and (SiO_{4/2}) units, organopolysiloxane resin consisting of (PbSiO_{3/2}), (Me₂ViSiO_{1/2}), and (SiO_{4/2}) units, organopolysiloxane resin consisting of (PhSiO_{3/2}), (Ph₂SiO_{2/2}), and (Me₂ViSiO_{1/2}) units, organopolysiloxane resin consisting of (MeSiO_{3/2}), (Ph₂SiO_{2/2}), and (Me₂ViSiO_{1/2}) units, organopolysiloxane resin consisting of (PhSiO_{3/2}) and (MePhViSiO_{1/2}) units, organopolysiloxane resin consisting of (PhSiO_{3/2}), (MeSiO_{3/2}), and (MePhViSiO_{1/2}) units, and organopolysiloxane resin consisting of (PhSiO_{3/2}), (MePhViSiO_{1/2}), and (siO_{4/2}) units [where Me stands for methyl, Ph for phenyl, and Vi for vinyl] are suggested as specific examples of the organopolysiloxane resins. Same below]. Two or more kinds of such organopolysiloxane resins can be used in combination. These organopolysiloxane resins usually have reticular and three-dimensional structures.

Processes used in the preparation of such organopolysiloxane resins are well known (for example, see Kunio Itoh's "Silicone Handbook", (published by Nikkan Kogyo Shinbunsha, 1990), pp. 468~470, or M. Wada, "Newest Silicone Technology: Research and Applications" (published by CMC, 1986), pp. 80~81). For instance, they can be easily prepared by hydrolytic co-condensation of corresponding organochlorosilanes or organoalkoxysilanes in an organic solvent, or by hydrolytic co-condensation of corresponding organosiloxane oligomers and organoalkoxysilanes in an organic solvent in the presence of a strong acid catalyst.

The organopolysiloxane resins thus prepared have, in general, high content of silanol groups and silicon-bonded alkoxy groups. Because the presence of the silanol groups and silicon-bonded alkoxy groups results in a decrease in the storage stability and heat resistance of the organopolysiloxane resin, the content of silanol groups and silicon-bonded alkoxy groups should be preferably reduced to trace amounts via dehydration condensation or dealcoholation condensation by heating the resin in the presence of a small amount of potassium hydroxide. Preferably, there should not be more than 2 mol%, and even more preferably, not more than 1 mol% of such groups relative to all the silicon-bonded substituent groups.

There are no particular limitations concerning the molecular weight of the organopolysiloxane resin of component (A), but preferably, its molecular weight should be such that the resin becomes liquid at least at 200°C or less. This is due to the fact that curing and molding operations are facilitated under heating, but heating the resin to an elevated temperature higher than 200°C causes the resin to decompose. On the other hand, in order to preserve strength after curing, the organopolysiloxane resin should preferably have a high molecular weight and a wide molecular weight distribution. In addition, it is recommended that the ratio of (R³SiO_{3/2}) units and (R¹₃SiO_{1/2}) units in the average unit formula (1), i.e. c/a, should be not less than 0.6 and not more than 9.0, with its viscosity at 25°C being not less than 1000 mPa·s. Naturally, when component (d2) is added, the viscosity will be higher than that.

The organopolysiloxane resin has to have at least three silicon-bonded monovalent unsaturated aliphatic hydrocarbon groups per molecule. From the standpoint of hydrosilation reactivity and heat resistance after curing, vinyl groups are preferable as the monovalent unsaturated aliphatic hydrocarbon groups. Even if there are two such monovalent unsaturated aliphatic hydrocarbon groups per molecule, the crosslinking reaction will take place, if there are three or more silicon-bonded hydrogen atoms in the organosilicon compound as component (B), but it will be difficult to produce a cured product possessing hardness and elasticity sufficient for use in an optical waveguide.

The organosilicon compound of component (B) having two or more silicon-bonded hydrogen atoms per molecule can be organosilane, organosiloxane oligomer, or organopolysiloxane. While there are no particular limitations concerning its molecular structure, in order to produce a cured product possessing high transparency it is preferably similar to component (A) in terms of molecular structure. Namely, not less than 5 mol% of all its silicon-bonded monovalent substituent groups have to be monovalent aromatic hydrocarbon groups, and it is preferable that not less than 10 mol% of such groups should be monovalent aromatic hydrocarbon groups. If the content is less than 5 mol%, the transparency of the cured product decreases and there is a drop in transparency in the communication wavelength region

The monovalent aromatic hydrocarbon groups are exemplified by phenyl, tolyl, xylyl, and naphthyl, with phenyl being preferable. Organic groups other than the monovalent aromatic hydrocarbon groups are preferably the above-mentioned monovalent saturated aliphatic hydrocarbon groups, with methyl being preferable. In addition, when an optical waveguide is fabricated by curing component (A) and the present component via a hydrosilation reaction, high volatility leads to insufficient curing, which is why low volatility compounds are more preferable. Specifically, compounds with a boiling point of less than 200°C under normal pressure are undesirable.

Diphenylsilane, 1,2-bis(dimethylsilyl)benzene, 1,4-bis(dimethylsilyl)benzene and other organosilanes having two silicon-bonded hydrogen atoms;
phenyltris(dimethylsiloxy)silane, tris(methylphenylsiloxy)silane,
tetra(methylphenylsiloxy)silane and other organosiloxane oligomers having three or four silicon-bonded hydrogen atoms;

Organopolysiloxane resin consisting of (PhSiO_{3/2}) and (Me₂HSiO_{1/2}) units, organopolysiloxane resin or branched organosiloxane oligomer consisting of (PhSiO_{3/2}), (Me₂SiO_{2/2}), and (MeHSiO_{1/2}) units, organopolysiloxane resin or branched organosiloxane oligomer consisting of (PhSiO_{3/2}), (MeSiO_{3/2}), and (MeHSiO_{1/2}) units, organopolysiloxane resin or branched organosiloxane oligomer consisting of (PbSiO_{3/2}) and (MeHSiO_{2/2}) units, organopolysiloxane resin or branched organosiloxane oligomer consisting of (Me₂HSiO_{1/2}), (MePh₂SiO_{1/2}) and (SiO_{4/2}) units; linear organopolysiloxane or organosiloxane oligomer consisting of (MePhSiO_{2/2}) and (Me₂HSiO_{1/2}) units, linear organopolysiloxane or organosiloxane oligomer consisting of (Me₂SiO_{2/2}), (MePhSiO_{2/2}) and (Me₂HSiO_{1/2}) units, linear organopolysiloxane or organosiloxane oligomer consisting of (MePhSiO_{2/2}), (MeHSiO_{2/2}) and (Me₃SiO_{1/2}) units, linear organopolysiloxane or organosiloxane oligomer consisting of (MePhSiO_{2/2}), (MeHSiO_{2/2}) and (Me₂HSiO_{1/2}) units, linear organopolysiloxane or organosiloxane oligomer consisting of (PhHSiO_{2/2}) and (Me₃SiO_{1/2}) units, linear organopolysiloxane or organosiloxane oligomer consisting of (MeHSiO_{2/2}) and (MePh₂SiO_{1/2}) units, and cyclic organopolysiloxane or organosiloxane oligomer consisting only of (PhHSiO_{2/2}) units are suggested as specific examples.

Two or more kinds of these organosilicon compounds can be used in combination. Processes used in the preparation of these organosilicon compounds are publicly known or well-known, and such compounds, for instance, can be produced via a hydrolytic condensation reaction using only organochlorosilanes containing silicon-bonded hydrogen atoms, or by means of a hydrolytic co-condensation reaction between organochlorosilanes having silicon-bonded hydrogen atoms and organochlorosilanes having no silicon-bonded hydrogen atoms.

The hydrosilation catalysts of component (C) are metals of Group VIII of the Periodic Table or their compounds, with platinum and platinum compounds being preferable. They are exemplified by microparticulate platinum, chloroplatinic acid, platinum-diolefin complexes, platinum-diketone complexes, platinum-divinyltetramethyldisiloxane complexes, and platinum-phosphine complexes. The amount, in which it is added, is in the range of 0.05 to 300 ppm, and, more preferably, in the range of 0.1 to 50 ppm in terms of the weight of the metal relative to the total weight of component (A) and component (B). Below this range, the crosslinking reaction may not proceed to a sufficient extent, while exceeding the range is unnecessary and may cause deterioration in the optical properties due to the residual metal.

The organopolysiloxane resin composition for optical waveguides of the present invention is obtained by uniformly mixing component (A), component (B) and component (C). When these three components are mixed, the crosslinking reaction takes place even at normal temperature, causing an increase in viscosity and ultimately curing, which is why it is better to either prepare a mixture of component (A) and component (B) and combine component (C) with it at the time of molding, or prepare a mixture of component (A) and component (C) and combine component (B) with it at the time of molding.

The proportion, in which component (A) and component (B) are mixed, is such that the mole ratio of silicon-bonded hydrogen atoms in component (B) to unsaturated aliphatic groups in component (A) is preferably 0.2 to 5.0, and even more preferably, 0.7 to 1.5. The proportion, in which component (A) and component (B) are mixed, is preferably varied depending on the intended use of the resultant cured product.

If the cured product is to be used in the near ultraviolet wavelength region, it is desirable to make sure no unsaturated aliphatic hydrocarbon groups remain after curing by adjusting the amount of silicon-bonded hydrogen atoms such that it slightly exceeds the amount of all the unsaturated aliphatic hydrocarbon groups. The residual silicon-bonded hydrogen atoms have no absorption bands in this region and will not impair optical characteristics.

On the other hand, if the cured product is to be used in the near infrared wavelength region, it is desirable to make sure no silicon-bonded hydrogen atoms remain after curing by adjusting the amount of unsaturated aliphatic hydrocarbon groups such that it slightly exceeds the amount of all the silicon-bonded hydrogen atoms. This is due to the fact that silicon-bonded hydrogen atoms undergo oxidation under the action of the environment when the cured product is used and may turn into silicon-bonded hydroxyl groups that exhibit absorption in this wavelength region, with the hydroxyl groups functioning as sites for adsorption of ambient moisture.

While the viscosity of the curable organopolysiloxane resin composition of the present invention varies depending on the molding process used, preferably, it is not more than 1×10⁷ mPa·s, and even more preferably, not more than 1×10⁶ mPa-s at 25°C. In case of spin-coating on a substrate at normal temperature, it is preferably not more than 1×10⁴ mPa·s at 25°C. At a higher viscosity it is difficult to obtain a film of uniform thickness when spin-coating the composition on a substrate. While there are no particular limitations concerning the lower boundary value of viscosity, typically, it is greater than 500 mPa·s at 25°C because it is influenced by the viscosity of component (A) and is naturally higher than the viscosity of component (d2). When the viscosity of component (A) and component (B), and especially that of component (A), is too high and unsuitable for spin coating, the composition is preferably diluted with (d1) a solvent. When the viscosity of component (A) and component (B), and especially that of component (A), is too high and makes the composition unsuitable for casting in a mold, the composition is preferably diluted with (d2) a hydrosilation-reactive organosiloxane-based diluent.

Solvents with a boiling point of 80 to 200°C are recommended as solvent (d1). They are specifically exemplified by isopropyl alcohol, t-butyl alcohol, methyl ethyl ketone, methyl isobutyl ketone, toluene, xylene, mesitylene, chlorobenzene, ethylene glycol dimethyl ether, ethylene glycol diethyl ether, diethylene glycol dimethyl ether, ethoxy-2-propanol acetate, methoxy-2-propanol acetate, octamethylcyclotetrasiloxane, and hexamethyldisiloxane. Such a solvent (d1) can be used singly or as a combination of two or more solvents.

While the concentration of solid matter in the composition diluted with solvent depends on the thickness of the coating film to be formed and the viscosity and molecular weight of component (A) and component (B), and especially, on those of component (A), it is desirable that the concentration should be not less than 20 wt%. In addition, the viscosity of the composition diluted with solvent (d1) that is suitable for forming thin films of excellent quality using a general-purpose spin coating machine is preferably 10 to 1×10⁴ mPa·s at 25°C.

The hydrosilation-reactive organosiloxane-based diluent (d2) is effective in lowering the viscosity of the composition without significantly impairing the physico-mechanical properties of the cured product of organopolysiloxane resin. It is recommended to use organosiloxane oligomers having at least two monovalent unsaturated aliphatic hydrocarbon groups per molecule, wherein 5 mol% ore more of all the monovalent hydrocarbon groups in the molecule are monovalent aromatic hydrocarbon groups and the number of silicon atoms is not more than 15.

Their viscosity at 25°C should preferably be not more than 500 mPa·s, and even more preferably, not more than 300 mPa·s. Such organosiloxane oligomers have excellent compatibility with component (B) and component (A) having monovalent aromatic hydrocarbon groups, take part in the crosslinking reaction, and have high transparency in the communication wavelength region of the cured product of organopolysiloxane resin.

This component is exemplified by 1,3-divinyldimethyldiphenyldisiloxane, 1,5-divinyltetramethyldiphenyltrisiloxane, phenyltris(dimethylvinylsiloxy)silane, and methylvinylphenylsioxane oligomer consisting of (PhSiO_{3/2}) and (Me₂ViSiO_{1/2}) units.

Because component (d2) has a negative effect on the storage stability of the composition and causes a decrease in the heat resistance and temperature change stability of the cured product of organopolysiloxane resin when its molecules contain silanol groups and silicon-bonded alkoxy groups, preferably, it should contain only trace amounts, or be completely free of silanol groups and silicon-bonded alkoxy groups. As the amount of component (d2) added to the composition increases, the mechanical strength of the cured product of organopolysiloxane resin decreases to some extent depending on its molecular structure

For this reason, the amount, in which it is added, should be determined with a view to strike a balance between such physical properties. The recommended amount to be added is such that the weight ratio of [reactive diluent]/[component (A) + component (B)] is in the range of from 5/95 to 80/20, and, even better, the recommended amount is such that the ratio is in the range of from 5/95 to 40/60. The viscosity of the composition diluted with component (d2) is preferably 20 to 1×10⁴ mPa·s at 25°C.

Because the curable organopolysiloxane resin composition comprising component (A), component (B), component (C) and solvent (d1) is liquid at normal temperature and possesses excellent fluidity, the composition is particularly suitable for spin coating. Because the curable organopolysiloxane resin composition comprising component (A), component (B), component (C) and hydrosilation reactive organosiloxane-based diluent (d2) is liquid at normal temperature and possesses excellent fluidity, the composition is particularly suitable for cast molding.

When component (A), component (B) and component (C) are mixed, the crosslinking reaction takes place even at normal temperature, causing an increase in viscosity and ultimately curing, which is why a cure retarder is added to the composition, if necessary, in order to prevent an increase in viscosity and curing at normal temperature and facilitate curing under heating. The cure retarders include compounds typically used in hydrosilation-curable compositions, such as, for instance, 3-methyl-1-butyne-3-ol, 3,5-dimethyl-1-hexyne-3-ol, phenylbutynol, and other alkyene alcohols; 3-methyl-3-pentene-1-yne, 3,5-dimethyl-1-hexyne-3-yne and other ene-yne compounds; alkynyl-containing ketones; methyltris(1,1-dimethylpropinoxy)silane, dimethyldi(1,1-dimethylpropinoxy)silane, and other alkynyl-containing organosilanes; benzotriazole; maleic acid esters, and fumaric acid esters.

It is recommended that the amount, in which they are added, should be such that the weight ratio of [cure retarder]/[metal in hydrosilation catalyst] is 10 to 10,000. When a large amount of the above-mentioned cure retarder is added, the composition can be a one-package organopolysiloxane resin composition comprising all the components. In addition, so long as the object of the invention is not impaired, it can be combined with adhesion promoters represented by silane coupling agents, and with other additives.

The optical waveguide of the present invention comprises a hydrosilation-cured product of (A) an organopolysiloxane resin, which is represented by an average unit formula (1)_{:} (R¹₃SiO_{1/2})ₐ(R²SiO_{2/2})_{b}(R³SiO_{3/2})_{c}(SiO_{4/2})_{d} (1) (wherein R¹, R², and R³ stand for one, two, or more kinds of monovalent hydrocarbon groups selected from monovalent aliphatic hydrocarbon groups having 1 to 6 carbon atoms and monovalent aromatic hydrocarbon groups having 6 to 10 carbon atoms, 0<a≤0.5, 0≤b<0.2, 0.3≤c<1, 0≤d<0.4, 0≤(b+d)/(a+c)≤0.25, and a+b+c+d=1) and has three or more monovalent unsaturated aliphatic hydrocarbon groups per molecule, with not less than 10 mol% of the monovalent hydrocarbon groups being monovalent aromatic hydrocarbon groups, and (B) an organosilicon compound having two or more silicon-bonded hydrogen atoms per molecule, with not less than 5 mol% of all the silicon-bonded monovalent substituent groups being monovalent aromatic hydrocarbon groups.

Optical waveguides, generally consist of a core having high refractive index and a cladding having a low refractive index. In the organopolysiloxane resin of component (A), both when used for the core and for the cladding, 10 mol% or more of its silicon-bonded monovalent hydrocarbon groups have to be monovalent aromatic hydrocarbon groups. In the organosilicon compound of component (B), not less than 5 mol% of all its silicon-bonded monovalent substituent groups are monovalent aromatic hydrocarbon groups. If this requirement regarding their content is not satisfied, it would be detrimental because of the decrease in the transparency of the cured product of organopolysiloxane resin in the communication wavelength region.

The refractive index of the cured product of organopolysiloxane resin can be adjusted using the ratio of silicon-bonded monovalent aliphatic hydrocarbon groups (typically, methyl) to monovalent aromatic hydrocarbon groups (typically, phenyl). An increase in the proportion of monovalent aromatic hydrocarbon groups brings about an increase in the refractive index, while increasing the proportion of monovalent aliphatic hydrocarbon groups causes a decrease in the refractive index. Because it is preferable to make the refractive index of the cured product of organopolysiloxane resin used for the core at least 0.1 % larger than that of the cured product of organopolysiloxane resin used for the cladding, it is preferable to make the content of monovalent aromatic hydrocarbon groups in the organopolysiloxane resin used for the core higher than that in the organopolysiloxane resin used for the cladding.

Thus, the refractive index of the cured product used for the core can be made higher than the refractive index of the cured product used for the cladding via a process, in which two kinds of organopolysiloxane resin with different mole ratios of [monovalent aliphatic hydrocarbon group]/[monovalent aromatic hydrocarbon groups] are used separately for the core and for the cladding, and/or a process, in which two kinds of component (B) with different mole ratios of [monovalent aliphatic hydrocarbon groups]/[monovalent aromatic hydrocarbon groups] are used separately for the core and for the cladding. Here, details concerning component (A) and component (B) are as described in the section on the components of the curable organopolysiloxane resin composition.

The optical waveguide comprising the cured product of organopolysiloxane resin of the present invention has a nearly 100% optical transparency if reflection in the visible light range is eliminated. In addition, so long as polarization is determined using a polarizer, no polarization can be observed and birefringence is so small that it can be ignored. Also, because the cured product preserves its original shape and exhibits no appreciable weight changes even when heated to 260°C, it can be said to possess heat resistance that is higher than that of thermoplastic resins used as optical materials, such as fluorinated polymethylmethacrylate resin. Furthermore, the cured product possesses elasticity and hardness to the extent that it does not easily bend and has sufficient self-maintaining strength.

The optical waveguide of the present invention can be used both as a passive optical waveguide and an active optical waveguide. Its possible uses are exemplified by non-branching waveguides, branching waveguides, optical splitters, optical couplers, and waveguide-type optical switches, waveguide-type optical modulators, optical attenuators, and optical amplifiers. In the optical waveguide of the present invention comprising a cured product of organopolysiloxane resin, the optical waveguide may consist of the cured product of organopolysiloxane resin alone, or it may be covered with other material or component, held between other components or members, or inserted into other components or devices.

The optical waveguide of the present invention comprising a cured product of organopolysiloxane resin is fabricated by heating and curing the above-mentioned curable organopolysiloxane resin composition for optical waveguides. The processes of fabrication can be roughly divided into the following two categories. In other words, there is a process for fabricating an optical waveguide, in which the curable organopolysiloxane resin composition for optical waveguides is coated onto a substrate and cured by heating, and a process for fabricating an optical waveguide, in which the curable organopolysiloxane resin composition for optical waveguides is cast and cured by heating in a mold having a desired shape of the inner surface. Injection molding, extrusion molding and other fabrication processes can be also used.

The substrate used in the first fabrication process preferably has a flat surface and is stable to solvents and temperatures used during curing. It is exemplified by silicon wafers, glass, ceramics, and heat-resistant plastics.

An optical waveguide with a high transmittance in the designated wavelength region is fabricated by coating the above-mentioned curable organopolysiloxane resin composition for optical waveguides onto the substrate and curing it by heating, but, if necessary, a film-like optical waveguide is obtained by peeling the cured product from the substrate. In addition, a slab optical waveguide can be fabricated by ① applying the above-mentioned curable organopolysiloxane resin composition for optical waveguides (1) to a substrate and curing it by heating, ② applying a curable organopolysiloxane resin composition for optical waveguides (2), whose cured product has a refractive index at least 0.1 % higher than that of the above-mentioned composition (1), to the cured product thereof and curing it by heating, ③ applying the aforementioned composition (1) to the cured product thereof and curing it by heating, and then ④ peeling the cured product off the substrate.

In this case, the cured product of the above-mentioned composition (1) is used for a bottom cladding layer and a top cladding layer, with the cured product of the above-mentioned composition (2) serving as a core layer. A film-shaped channel optical waveguide is obtained by imparting a desired shape to the cured product of the above-mentioned composition (2), and then coating the above-mentioned composition (1) onto the cured product of the above-mentioned composition (1) and the cured product of the above-mentioned composition (2) and curing it, followed by peeling from the substrate, if necessary.

When imparting the desired shape to the cured product of the above-mentioned composition (2), it is best to conduct etching using a desired pattern. At such time, a core pattern is formed by forming a resist pattern on the cured product of the above-mentioned composition (2) (core layer) by means of photolithography, removing the core layer that is not protected by the resist pattern by etching, and then removing said resist.
In addition, a film-shaped channel optical waveguide is also obtained by coating the above-mentioned curable organopolysiloxane resin composition for optical waveguides (1) onto a substrate and curing it by heating, peeling the cured product (bottom cladding layer) from the substrate, and forming a core pattern and a top cladding layer on top of the above-mentioned cured product in accordance with the gist of the above description.

The curable organopolysiloxane resin composition for optical waveguides used in the above-described processes is preferably liquid at normal temperature, and, in particular, has a viscosity of 20 to 1×10⁴ mPa·s at 25°C.

Preferable compositions contain component (D), in particular, component (d1). Although the curing temperature used at such time depends on the components that constitute said composition, in particular, on the type and amount of component (C), and, furthermore, on the type and amount of the cure retarder, usually it is in the range of from 80 to 200°C. The process used for coating the curable organopolysiloxane resin composition for optical waveguides used in the above-mentioned fabrication processes is preferably spin coating because it allows for quickly forming uniform films. During the fabrication of film-shaped optical waveguides, solvent casting may be used instead of spin coating.

The mold used in the second fabrication process is preferably a mold made up of a substrate whose thermal expansion coefficient is smaller than the thermal expansion coefficient of the cured product of organopolysiloxane resin. Naturally, the cured product of organopolysiloxane resin must be easy to remove from the mold. If it has insufficient mold release properties, it is better to carry out molding only after coating the inner surface of the mold with a mold release agent.

An optical waveguide having a high transmittance in the communication wave length region can be fabricated by ① casting a curable organopolysiloxane resin composition for awaveguides into a mold having on its inner surface protrusions corresponding to the core and curing it by heating, ② the molding is removed from the mold, ③ casting a curable organopolysiloxane resin composition for optical waveguides (4), whose cured product has a refractive index at least 0.1% higher than that of the aforementioned composition (3), into the hollow portion of the cured product removed from the mold and curing it by heating, and then ④ coating the aforementioned composition (3) onto the cured product of the aforementioned composition (4) and the cured product of the aforementioned composition (3) and curing by heating.

At such time, the cured product that is removed from the mold is fitted into another mold, after which the above-mentioned curable organopolysiloxane resin composition for optical waveguides (4) is cast into it and cured by heating, and the above-mentioned composition (3) is coated and cured by heating on top of the cured product of the above-mentioned composition (4) and the cured product of the above-mentioned composition (3).

The curable organopolysiloxane resin composition used in the second fabrication process preferably contains component (D) and, in particular, component (d2). Its viscosity at 25°C is preferably 20 to 1×10⁴ mPa·s.

The width of the hollow portion, into which the curable organopolysiloxane resin composition is cast, is usually not more than several tens of µm, which is why the viscosity of the curable organopolysiloxane resin composition used for the core has to be sufficiently low to permit easy casting. Because the viscosity of said composition decreases as the temperature is raised, casting is possible if the above-mentioned viscosity at 25°C is 1×10⁷ mPa·s or less, but casting at the temperature range close to room temperature requires an even smaller viscosity.

While the curing temperature at such time depends on the type and amount of the components making up said composition, in particular, component (C), and, furthermore, on the type and amount of the cure retarder, in case of a curable organopolysiloxane resin composition consisting of component (A), component (B) and component (C), the temperature is preferably in the range of from 80 to 180°C, and in case of a curable organopolysiloxane resin composition consisting of component (A), component (B), component (C), and component (D) (d2) hydrosilation reactive organosiloxane-based reactive diluent, the temperature is preferably in the range of from 20 to 180°C.

Under heating, dimensions of the mold, which is made up of metal or ceramics with a small coefficient of thermal expansion, practically do no change, and, on the other hand, the cured product of organopolysiloxane resin, which has a large coefficient of thermal expansion, undergoes thermal expansion and is subjected to pressure as a result. Thus, the cured product of organopolysiloxane resin comes into close contact with the surface of the mold and the pattern from the surface of the mold is accurately transferred to the cured product of organopolysiloxane resin. Upon termination of curing, the mold is cooled and the cured product of organopolysiloxane resin shrinks. Slow cooling is preferable to minimize the generation of shrinkage stress due to local cooling.

The curable organopolysiloxane resin composition for optical waveguides of the present invention has low temperature dependence of the refractive index, high heat resistance, high transparency at the telecommunication wavelength region without introducing deuterated alkyl groups and fluorinated hydrocarbon groups, possesses elasticity and hardness that makes it difficult to deform, and permits easy adjustment of the refractive index difference between the core material and cladding material during the fabrication of an optical waveguide.

An optical waveguide comprising the cured product of the organopolysiloxane resin of the present invention have low temperature dependence of the refractive index, high heat resistance, high transparency at the telecommunication wavelength region even without the introduction of deuterated alkyl groups and fluorinated hydrocarbon groups, possess elasticity and hardness that makes them difficult to deform, and permit easy adjustment of the refractive index difference between the core material and cladding material during the fabrication of optical waveguides. In addition, an optical waveguide comprising the cured products of the organopolysiloxane resin of the present invention rarely exhibit transmission losses in the telecommunication wavelength band and are thus suitable for use as materials for optical telecommunications and optical interconnects in the near infrared region and optical integrated circuits in the near infrared region.

The process for fabricating an optical waveguide of the present invention makes it possible to easily and economically produce an optical waveguide comprising the cured product of organopolysiloxane resin that has low temperature dependence of the refractive index, high heat resistance, high transparency at the telecommunication wavelength region even without the introduction of deuterated alkyl groups and fluorinated hydrocarbon groups, possesses elasticity and hardness that makes it difficult to deform, and eliminates intermixing between the core and cladding during the fabrication of an optical waveguide.

### Examples

While examples and comparative examples are provided below in order to specifically explain the present invention, the present invention is not limited to these examples. Gel permeation chromatography (GPC) was used for the determination of the molecular weight of reactive diluents, organosilicon compounds, and organopolysiloxane resins used, with their number-average molecular weight calculated by comparison with a polystyrene standard. Viscosity was determined using a rotary viscometer at 25°C.

The content of silanol groups and methoxy or ethoxy groups was determined by the ²⁹Si NMR analysis. The refractive index of the cured product was determined at a wavelength of 1550 nm using a prism coupler method, and the thickness of the film was determined using Tencor Alpha-Step 200. The elastic modulus of the cured product was determined using a dynamic viscoelasticity measuring device on 2-mm thick plate, at a frequency of 1 Hz and a strain of 0.5% in the temperature range of 0 to 50°C. In addition, the transparency of the cured product was measured using a spectrophotometer with a 3-mm thick plate, at a wavelength of 1550 nm. The optical loss value at 1550 nm of the cured product was determined by the cutback method. The polarization dependency of the cured product was observed under an optical microscope using a polarizer. The heat resistance of the cured product was evaluated by thermogravimetric analysis.

Summary on the organopolysiloxane resin of component (A) and organosilicon compound of component (B) used in the examples (in the formulas, Me stands for methyl, and Ph stands for phenyl);

### Methylvinylphenylpolysiloxane resin (A-1):

Average unit formula: [Me₂(CH₂=CH)SiO_{1/2}]_{0.25}[PhSiO_{3/2}]_{0.75}, phenyl groups content: 50 mol%, number-average molecular weight: 1900, viscosity: >1,000,000 mPa·s, silanol group and methoxy group content: 0.8 mol%, preparation process: 1,3-divinyl-1,1,3,3-tetramethyldisiloxane, phenyltrimethoxysilane and a catalytic amount of trifluoromethanesulfonic acid-containing water were subjected to agitation at reflux under heating to bring about hydrolytic condensation, and, after neutralizing said acid catalyst with a base, water and methanol were eluted, a small amount of potassium hydroxide was added to the residue dissolved in toluene, dehydration was carried out under heating and agitation, and, after neutralizing the potassium hydroxide with an acid, the salt was filtered off and toluene was subjected to elution.

### Methylvinylphenylpolysiloxane resin (A-2):

Average unit formula: [Me₂(CH₂=CH)SiO_{1/2}]_{0.25}[PhSiO_{3/2}]_{0.65}, phenyl group content: 46 mol%, number-average molecular weight: 2300, viscosity: >1,000,000 mPa·s, silanol group and ethoxy group content: 1 mol%, preparation process: vinyldimethylchlorosilane, phenyltrichlorosilane, tetraethylorthosilicate, and water were subjected to agitation at reflux under heating to bring about hydrolytic condensation, and, after neutralizing the resultant hydrochloric acid with a base, water and ethanol were eluted, a small amount of potassium hydroxide was added to the residue dissolved in toluene, dehydration was carried out under heating and agitation, and, after neutralizing the potassium hydroxide with acid, the resultant salt was filtered off and toluene was eluted.

### Methylvinylphenylpolysiloxane resin (A-3):

Average unit formula: [Me₂(CH₂=CH)SiO_{1/2}]_{0.25}[MeSiO_{3/2}]_{0.40}[PhSiO_{3/2}]_{0.35}, phenyl group content: 23 mol%, number-average molecular weight: 4600, viscosity: >1,000,000 mPa·s, silanol group and methoxy group content: 1 mol%, preparation process: 1,3-divinyl-1,1,3,3-tetramethyldisiloxane, methyltrimethoxysilane, phenyltrimethoxysilane and a catalytic amount of trifluoromethanesulfonic acid-containing water were subjected to agitation at reflux under heating to bring about hydrolytic condensation, and, after neutralizing said acid catalyst with a base, water and methanol were eluted, a small amount of potassium hydroxide was added to the residue dissolved in toluene, dehydration was carried out under heating and agitation, and, after neutralizing the potassium hydroxide with an acid, the resultant salt was filtered off and toluene was eluted.

### Methylphonylhydrogenpolysiloxane (B-1):

Average unit formula: [Me₂HSiO_{1/2}]_{0.6}[PhSiO_{3/2}]_{0.4}, phenyl group content: 18 mol%, number-average molecular weight: 900, viscosity: 30 mPa·s, silanol and methoxy group content: 0.2 mol%, preparation process: 1,1,3,3-tetramethyldisiloxane, phenyltrimethoxysilane, and a catalytic amount of trifluoromethanesulfonic acid were subjected to agitation under cooling to bring about hydrolytic condensation, and, after neutralizing said acid catalyst with a base, the salt was filtered off and water was eluted.

### Methylphenylhydrogenpolysiloxane (B-2):

Average unit formula: [Me₂HSiO_{1/2}]_{0.2}[MeHSiO]_{0.4}[MePhSiO]_{0.4}, phenyl group content: 18 mol%, number-average molecular weight: 900, viscosity: 25 mPa·s, silanol and methoxy group content: 0.1 mol%, preparation process: 1,1,3,3-tetramethyldisiloxane, methyldichlorosilane, and methylphenyldichlorosilane were subjected to agitation under cooling to bring about hydrolytic condensation, and, after neutralizing the resultant hydrochloric acid with a base, the resultant salt was filtered off and water was eluted.

### Methylvinylphenylsiloxane oligomer (d2):

Average unit formula: [Me₂(CH₂=CH)SiO_{1/2}]_{0.67}[PhSiO_{3/2}]_{0.33}, phenyl group content: 14 mol%, number-average molecular weight: 650, viscosity: 50 mPa·s, silanol and methoxy group content: 0.2 mol%, preparation process: 1,3-divinyl-1,1,3,3-tetramethyldisiloxane, phenyltrimethoxysilane and a catalytic amount of trifluoromethanesulfonic acid-containing water were subjected to agitation at reflux under heating to bring about hydrolytic condensation, and, after neutralizing said acid catalyst with a base, water and methanol were eluted, a small amount of potassium hydroxide was added to the residue dissolved in toluene, dehydration was carried out under heating and agitation, and, after neutralizing the potassium hydroxide with acid, the resultant salt was filtered off and toluene was eluted.

### Example 1

This example illustrates the formation of a cured product of methylvinylphenylpolysiloxane resin used for optical waveguides.
Coating solutions comprising curable organopolysiloxane resin compositions for optical waveguides were prepared by mixing the above-mentioned methylvinylphenylpolysiloxane resins (A-1), (A-2), and (A-3), which were used as component (A), the above-mentioned methylphenylhydrogenpolysiloxanes (B-1) and (B-2), which were used as component (B), a platinum/1,3-divinyltetramethyldisiloxane complex [platinum content: 2 wt%] (C), which was used as component (C), methyl(tris(1,1-dimethyl-2-propynyloxy))silane (E), which was used as a cure retarder, and toluene, which was used as component (d1), using the proportions listed in Table 1 below (unit: g).

Using a chamber-open type system, the coating solutions were spin coated onto a silicon substrate at 2000 rpm and left stand for 10 minutes at room temperature. After that, hydrosilation-cured products of the methylphenylhydrogenpolysiloxane and the methylvinylphenylpolysiloxane resins with a uniform thickness of 7 to 8 µm were obtained by heating at 180°C for 90 minutes.
The viscosities of the coating solutions, as well as the transparency and refractive indices of the cured products of the coating solutions are listed in Table 1.

**[Table 1]**

| | Composition 1 | Composition 2 | Composition 3 | Composition 4 | Composition 5 |
|---|---|---|---|---|---|
| (A-1) | 20.0 | 20.0 | | | |
| (A-2) | | | 20.0 | | 17.0 |
| (A-3) | | | | 20.0 | 3.0 |
| (B-1) | 6.4 | | 6.9 | 8.1 | 7.1 |
| (B-2) | | 6.4 | | | |
| (C) | 0.004 | 0.004 | 0.004 | 0.004 | 0.004 |
| (E) | 0.008 | 0.009 | 0.008 | 0.008 | 0.008 |
| (d-1) | 11.3 | 11.3 | 11.5 | 12.0 | 11.6 |
| Viscosity-1 | 100,000 | 94,000 | 170,000 | 250,000 | 195,000 |
| Viscosity-2 | 30 | 28 | 35 | 45 | 38 |
| Refractive index | 1.530 | 1.526 | 1.525 | 1.300 | 1.519 |
| Transmittance | 96.0 | 95.8 | 95.2 | 94.0 | 94.0 |

| | | | | | |
|---|---|---|---|---|---|
| (Note: "Viscosity-1" stands for the viscosity of the composition without component (d1) (unit: mPa·s)). "Viscosity-2" stands for the viscosity of the composition when it contains component (d1) (unit: mPa·s)). Both "refractive index" and "transparency " refer to values obtained by measurement of the cured products.) | | | | | |

All the cured products were colorless and transparent, with an elastic modulus of 0.8 to 1.0 GPa, in other words, they possessed elasticity and hardness that prevented them from being easily bent and had sufficient self-maintaining strength, and no changes due to dissolution, swelling, etc. were observed even after immersion in toluene overnight. In addition, the transmittance of the cured products in the telecommunication wavelength region were 94% or higher, with the optical loss value being 0.5 dB/cm, i.e. sufficient for use as optical waveguides.

### Example 2

This example illustrates the formation of a channel type optical waveguide consisting of a cured product of methylvinylphenylpolysiloxane resin fabricated by coating process.
Using a chamber-open type system, composition 5 of Table 1 was spin coated onto a silicon substrate, at 2000 µm and left stand for 10 minutes at room temperature. After that, a film consisting of a hydrosilation-cured product of the methylphenylhydrogenpolysiloxane and the methylvinylphenylpolysiloxane resins with a uniform thickness of 7 µm was obtained by heating at 180°C for 90 minutes. Its refractive index was 1.519. Next, the film consisting of the cured product was used for the bottom cladding layer and composition 3 of Table 1 was spin coated on top of it at 2000 rpm and left stand for 10 minutes at room temperature. After that, a film consisting of a hydrosilation-cured product of the methylphenylhydrogenpolysiloxane and the methylvinylphenylpolysiloxane resins with a uniform thickness of 7 pm was formed by heating at 180°C for 90 minutes.

A photoresist with a thickness of 2.0 µm was coated and patterned on top of the film made of the cured product that was used as the core layer. Using the resist as a photomask, reactive ion etching was carried out using a mixed gas containing CF₄, thereby creating a linear rectangular pattern of the core layer with a length of 50 mm, a width of 7.0 µm, and a height of 7.0 µm. The resist was then removed. Finally, spin coating of composition 5 of Table 1 at 2000 µm onto the core pattern and the bottom cladding layer and subsequent heating at 180°C for 90 minutes yielded a channel type optical waveguide. In the optical waveguide, there was no intermixing between the core and cladding while the optical loss value was 0.4 dB/cm. In addition, when the optical waveguide was heated in a stream of air, no weight loss was observed up to 280°C, which confirmed its superior heat resistance.

### Example 3

This example illustrates the formation of a slab type optical waveguide consisting of a cured product of methylvinylphenylpolysiloxane resin fabricated by coating process. After coating composition 5 of Table 1 onto a glass substrate and allowing it to stand for about 30 minutes at room temperature, a film made up of a hydrosilation-cured product of the methylphenylhydrogenpolysiloxane and the methylvinylphenylpolysiloxane resins with a thickness of 50 µm is fabricated by curing the composition by heating at 100°C for 1 hour and at 180°C for 1 hour and then peeling it from the glass substrate at room temperature. Its refractive index was 1.519. The film made up of the cured product did not exhibit polarization dependence and it was confirmed that its birefringence was negligibly small.

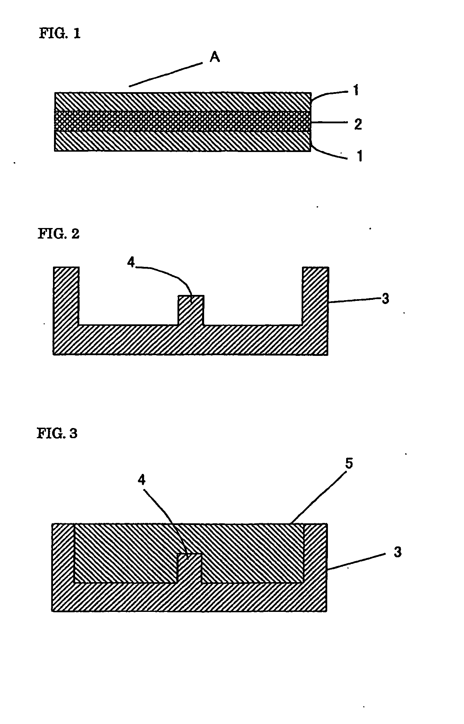

The film made up of the cured product was used for a bottom cladding layer, and composition 3 of Table 1 was coated onto it and cured by heating in the same manner, thereby forming a core layer with a refractive index of 1.525 consisting of a film made up of a hydrosilation cured product of the methylphenylhydrogenpolysiloxane and the methylvinylphenylpolysiloxane resins with a thickness of 50 µm. Furthermore, a top cladding layer with a thickness of 50 µm and a refractive index of 1.519 was formed on the film made up of the cured product by coating composition 5 of Table 1 and curing it by heating in the same manner, thereby producing a slab type optical waveguide with a three-layer structure, i.e. cladding layer - core layer - cladding layer, with a total thickness of 150 µm (see FIG. 1). The optical waveguide exhibited no intermixing between the core and cladding and no cracking or peeling even after repeated bending, and there was no polarization dependence observed. In addition, when the optical waveguide was heated in a stream of air, no weight loss was observed up to 280°C, which confirmed its superior heat resistance.

### Example 4

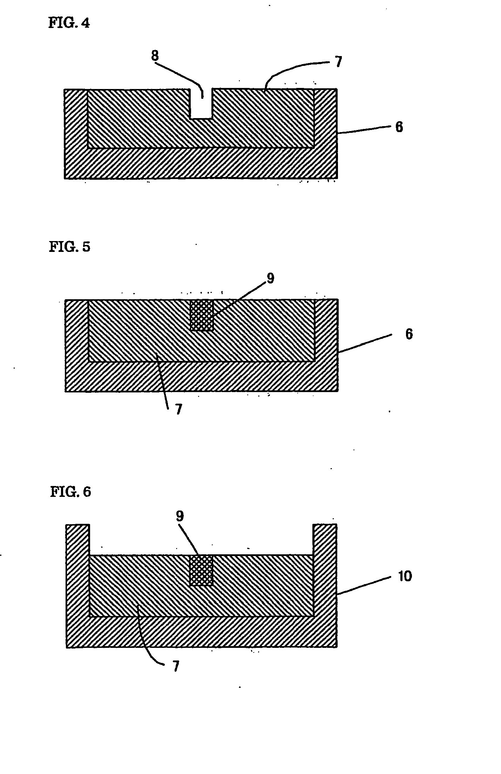

This example illustrates the formation of a channel type optical waveguide consisting of a cured product of methylvinylphenylpolysiloxane resin fabricated by casting process.
Composition 4 (which did not contain toluene) of Table 1 was heated to 80°C, cast into a first mold 3 (see FIG. 2) having a protrusion 4 (height: 50 µm, width: 50 µm, length: 50 mm) on its inner surface, which was heated to 80°C, and cured by heating at 100°C for 1 hour and then at 180°C for another one hour (see FIG. 3). The cured product 7 of composition 4 (did not contain toluene) 5 was removed from the first mold 3 at this temperature and placed in a second mold 6, which was heated to 80°C (see FIG. 4), and composition 3 (which did not contain toluene) of Table 1 was casted into the hollow portion 8 on the cured product 7 (height: 50 µm, width: 50 µm, length: 50mm) and cured by heating first at 100°C for one hour and then at 180°C for another one hour (see FIG. 5).

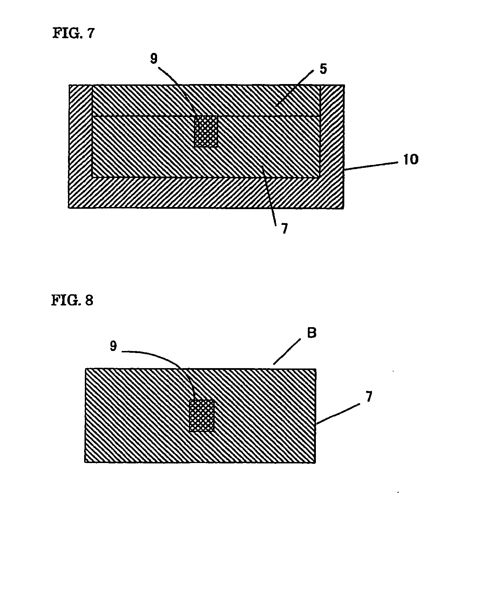

The cured product 7 of composition 4 (which did not contain toluene) was removed from the second mold 6 and placed in a third mold 10 (see FIG. 6), whereupon composition 4 (which did not contain toluene) was cast into it and cured by heating for one hour at 100°C and then at 180°C for another hour (see FIG. 7). The cured product was removed from the third mold 10, obtaining a cord-shaped channel type optical waveguide (see FIG. 8), which had a height of 50 µm, a width of 50 µm, and a length of 50 mm, and in which the refractive index of the core portion was 1.525 and that of the cladding portion was 1.500. The optical waveguide exhibited no intermixing between the core and cladding and no cracking while no cracking or peeling even after repeated bending as well as no polarization dependence were observed. In addition, when the optical waveguide was heated in a stream of air, no weight loss was observed up to 280°C, which confirmed its superior heat resistance.

### Example 5

This example illustrates the formation of a channel type optical waveguide consisting of a cured product of methylvinylphenylpolysiloxane resin fabricated by casting process.
A colorless transparent methylvinylphenylpolysiloxane resin composition 6 was prepared by uniformly mixing 10g of methylvinylphenylpolysiloxane resin (A-2) as component (A) with 10g of methylvinylphenylsiloxane oligomer (d2) as component (d2), and then adding 13g of methylphenylhydrogenpolysiloxane (B-1) as component (B), 5 mg of a platinum/1,3-divinyltetramethyldisiloxane complex [platinum content: 2 wt%] (C) as component (C), and 10 mg of methyl(tris(1,1-dimethyl-2-propinoxy))silane (E) as a cure retarder and uniformly mixing the ingredients. The viscosity of the composition was 200 mPa·s.

A colorless transparent methylvinylphenylpolysiloxane resin composition 7 was prepared by uniformly mixing 10g of methylvinylphenylpolysiloxane resin (A-3) as component (A) with 10g of methylvinylphenylsiloxane oligomer (d2) as component (d2), and then adding 13.9g of methylphenylhydrogenpolysiloxane (B-1) as component (B), 5 mg of a platinum/1,3-divinyltetramethyldisiloxane complex [platinum content: 2 wt%] (C) as component (C), and 10 mg of methyl(tris(1,1-dimethyl-3-propinoxy))silane (E) as a cure retarder and uniformly mixing the ingredients. The viscosity of the composition was 240 mPa·s.

With the exception of using composition 7 for the cladding and composition 6 for the core and casting and removing them from a mold at 25°C, a cord-shaped channel type optical waveguide was fabricated in the same manner as in Example 4. The refractive index of the cladding portion was 1.482 and that of the core portion was 1.505. The optical waveguide exhibited no intermixing between the core and cladding and no cracking while no cracking or peeling even after repeated bending as well as no polarization dependence were observed. When the optical waveguide was heated in a stream of air, no weight loss was observed up to 280°C, which confirmed its superior heat resistance.

### Comparative Example 1

This example illustrates the formation of a flexible optical waveguide based on an application example of Japanese Patent Application Publication No. Sho 63-217306. To a mixture of 100 parts by weight of a linear trimethylsiloxy-terminated dimethylsiloxane-methylphenylsiloxane copolymer with a viscosity of 5000 mPa·s (25 mol% phenyl groups, refractive index: 1.50) and 5 parts by weight of a trimethylsiloxy-terminated dimethylsiloxane-methylhydrogensiloxane copolymer with a viscosity of 5 mPa·s was added a chloroform solution of chloroplatinic acid to yield a hydrosilation-curable liquid silicone composition with a platinum content of 5 ppm by weight. The composition was extruded in a hot air form a strand-shape silicone rubber core with a diameter of 1mm.

Subsequently, after coating a hydrosilation-curable liquid silicone rubber composition with a viscosity of 3000 mPa·s (main ingredients: linear dimethylvinylsiloxy-terminated dimethylpolysiloxane, trimethylsiloxy-terminated dimethylsiloxane-methylhydrogensiloxane copolymer, and chloroplatinic acid, refractive index: 1.41) on the core, a strand-shaped flexible optical waveguide with a diameter of 1.4 mm was fabricated by curing the composition by heating it for 5 minutes at 150°C. The optical waveguide could be easily deformed and had no self-maintaining strength. In addition, when it was heated in the air, a weight loss due to decomposition was observed starting from 200°C, which indicated inferior heat resistance.

### Comparative Example 2

This example illustrates the formation of a polysilsesquioxane optical waveguide based on Working Example 2 of Japanese Patent Application Publication No. Hei 4-157402. Using polymethylsilsesquioxane (molecular weight Mw=2000, refractive index: 1.423) for the cladding and polyphenylsilsesquioxane (molecular weight Mw=15000, refractive index: 1.555) for the core, a channel type optical waveguide, in which the core made of polyphenylsilsesquioxane and had a with of µm, a height of 8 µm, and a length of 50 mm and both the top cladding layer made of polymethylsilsesquioxane and bottom cladding layer made of polymethylsilsesquioxane had a thickness of 20 µm, was fabricated by spin coating, photolithography, dry etching, and then again using spin coating as the final step. The optical loss value of the optical waveguide was not more than 0.5 dB/cm. When the optical waveguide was subjected to heat treatment at 260°C for 2 minutes, the refractive index of the core decreased by 0.3% and the refractive indices of both cladding layers decreased by 0.8%, thus changing the refractive index difference between the two in comparison with the difference that existed prior to the heat treatment. This indicated that this optical waveguide had inferior heat resistance.

### Industrial Applicability

The curable organopolysiloxane resin composition for optical waveguides of the present invention is useful for fabricating various optical waveguides and is suitable for use as materials for optical communications and optical integrated circuits in the near infrared region, the optical waveguide of the present invention is useful as passive optical waveguide exemplified by non-branching waveguides, branching waveguides, optical splitters, and optical couplers, and active optical waveguide exemplified by waveguide-type optical switches, waveguide-type optical modulator, optical attenuators, and optical amplifiers, and the process for fabricating an optical waveguide of the present invention is useful for fabricating various optical waveguides with lower process cost.

## Claims

1. An optical wave guide comprising a hydrosilation-cured product of a curable organopolysiloxane resin composition comprising
(A) an organopolysiloxane resin, which is represented by the average unit formula (1):
(R¹₃SiO_{1/2})ₐ(R²₂SiO_{2/2})_{b}(R³SiO_{3/2})_{c}(SiO_{4/2})_{d} (1)
(wherein R¹, R², and R³ stand for one, two, or more kinds of monovalent hydrocarbon groups selected from monovalent aliphatic hydrocarbon groups having 1 to 6 carbon atoms and monovalent aromatic hydrocarbon groups having 6 to10 carbon atoms, 0<a≤0.5, 0≤b<0.2, 0.3≤c<1, 0≤d≤0.4, 0≤ (b+d)/(a+c) ≤0.25, and
a+b+c+d=1 )and has three or more monovalent unsaturated aliphatic hydrocarbon groups per molecule, with not less than 10 mol% of the monovalent hydrocarbon groups being monovalent aromatic hydrocarbon groups,
(B) an organosilicon compound having two or more silicon-bonded hydrogen atoms per molecule, with not less than 5 mol% of all the silicon-bonded monovalent substituent groups being monovalent aromatic hydrocarbon groups, and
(C) a hydrosilation catalyst.

2. The optical wave guide according to claim 1, wherein the viscosity of the curable organopolysiloxane resin composition is not more than 1×10⁷ mPa·s at 25°C.

3. The optical wave guide according to claim 1 whereby the curable organopolysiloxane resin composition further comprises (D) (d1) a solvent or (d2) a hydrosilation-reactive organosiloxane-based diluent.

4. The optical wave guide according to any of claims 1-3, wherein both the cladding and the core of the optical waveguide consist of a hydrosilation-cured product of component (A) and component (B), with the refractive index of the core being at least 0.1 % higher than the refractive index of the cladding.

5. The optical wave guide according to claim 4, wherein the refractive index difference is regulated by making the total content of monovalent aromatic hydrocarbon groups in component (A) and component (B) used for the core higher than the total content of monovalent aromatic hydrocarbon groups in component (A) and component (B) used for the cladding.

6. The optical wave guide according to any of claims 1 to 5, which has a film-like shape.

7. A process for fabricating an optical wave guide, wherein the curable organopolysiloxane resin composition as defined in any of claims 1 to 3 is cured by heating.

8. A process for fabricating an optical wave guide, wherein the curable organopolysiloxane resin composition as defined in any of claims 1 to 3 is applied to a substrate and cured by heating.

9. A process for fabricating a slab optical waveguide, in which a curable organopolysiloxane resin composition for optical wave guides (1) as defined in any of claims 1 to 3 is applied to a substrate and cured by heating, a curable organopolysiloxane resin composition for optical wave guides (2), whose cured product has a refractive index at least 0.1 % higher than that of the above-mentioned composition (1), is applied to the cured product thereof and cured by heating, whereupon the aforementioned composition (1) is applied to the cured product thereof and cured by heating.

10. A process for fabricating an optical wave guide, wherein the curable organopolysiloxane resin composition as defined in any of claims 1 to 3 is casted into a mold having a desired inner surface shape and cured by heating.

11. A process for fabricating an optical wave guide, wherein
- a first curable organopolysiloxane resin composition as defined in any of claims 1 to 3 is cast into a mold having on its inner surface protrusions corresponding to the core and cured by heating,
- the molding is removed from the mold,
- a second curable organopolysiloxane resin composition according to any of claims 1 to 3, whose cured product has a refractive index at least 0.1% higher than that of the first composition, is cast into the hollow portion of the cured product removed from the mold and cured by heating, whereupon
- a composition according to said first composition is applied on top of the cured product of said second composition and the cured product of said first composition and cured by heating.

## Patentansprüche

1. Lichtwellenleiter enthaltend ein durch Hydrosilylierungsreaktion gehärtetes Produkt einer härtbaren Organopolysiloxanharzzusammensetzung enthaltend:
(A) ein Organopolysiloxanharz, das durch die mittlere Einheitenformel (1):
(R¹₃SiO_{1/2})ₐ(R²₂SiO_{2/2})_{b}(R³SiO_{3/2})_{c}(SiO_{4/2})_{d} (1)
wiedergegeben ist (worin R¹, R² und R³ für eine, zwei oder mehr Arten von einbindigen Kohlenwasserstoffgruppen stehen, die ausgewählt sind aus einbindigen aliphatischen Kohlenwasserstoffgruppen mit 1 bis 6 Kohlenstoffatomen und einbindigen aromatischen Kohlenwasserstoffgruppen mit 6 bis 10 Kohlenstoffatomen, 0<a≤0,5, 0≤b<0,2, 0,3≤c<1, 0≤d≤0,4, 0≤ (b+d)/(a+c) ≤0,25 und a+b+c+d=1)
und drei oder mehr einbindige ungesättigte aliphatische Kohlenwasserstoffgruppen pro Molekül aufweist, wobei nicht weniger als 10 mol-% der einbindigen Kohlenwasserstoffgruppen einbindige aromatische Kohlenwasserstoffgruppen sind,
(B) eine Organosiliciumverbindung mit zwei oder mehr an Silicium gebundenen Wasserstoffatomen pro Molekül, wobei nicht weniger als 5 mol-% aller an Silicium gebundenen einbindigen Substituentengruppen einbindige aromatische Kohlenwasserstoffgruppen sind, und
(C) einen Hydrosilylierungskatalysator.

2. Lichtwellenleiter gemäß Anspruch 1, wobei die Viskosität der härtbaren Organopolysiloxanharzzusammensetzung nicht mehr als 1×10⁷ mPa·s bei 25°C beträgt.

3. Lichtwellenleiter gemäß Anspruch 1, wobei die härtbare Organopolysiloxanharzzusammensetzung weiterhin (D) (d1) ein Lösungsmittel oder (d2) ein in der Hydrosilylierungsreaktion reaktives Verdünnungsmittel auf Basis eines Organosiloxans enthält.

4. Lichtwellenleiter gemäß einem der Ansprüche 1-3, worin sowohl die Ummantelung als auch der Kern des Lichtwellenleiters aus einem durch Hydrosilylierungsreaktion gehärteten Produkt der Komponente (A) und Komponente (B) besteht, wobei der Brechungsindex des Kerns wenigstens 0,1 % höher als der Brechungsindex der Ummantelung ist.

5. Lichtwellenleiter gemäß Anspruch 4, wobei der Brechungsindexunterschied **dadurch** eingestellt wird, dass der Gesamtgehalt an einbindigen aromatischen Kohlenwasserstoffgruppen in Komponente (A) und Komponente (B), die für den Kern verwendet werden, höher als der Gesamtgehalt an einbindigen aromatischen Kohlenwasserstoffgruppen in Komponente (A) und Komponente (B), die für die Ummantelung verwendet werden, ist.

6. Lichtwellenleiter gemäß einem der Ansprüche 1 bis 5, der eine folienartige Form aufweist.

7. Verfahren zur Herstellung eines Lichtwellenleiters, wobei die härtbare Organopolysiloxanharzzusammensetzung wie in einem der Ansprüche 1 bis 3 definiert durch Erwärmen gehärtet wird.

8. Verfahren zur Herstellung eines Lichtwellenleiters, wobei die härtbare Organopolysiloxanharzzusammensetzung wie in einem der Ansprüche 1 bis 3 definiert auf ein Substrat aufgebracht und durch Erwärmen gehärtet wird.

9. Verfahren zur Herstellung eines Lichtwellenleiters in Plattenform, bei dem eine härtbare Organopolysiloxanharzzusammensetzung für Lichtwellenleiter (1) wie in einem der Ansprüche 1 bis 3 definiert auf ein Substrat aufgebracht und durch Erwärmen gehärtet wird, eine härtbare Organopolysiloxanharzzusammensetzung für Lichtwellenleiter (2), deren gehärtetes Produkt einen Brechungsindex hat, der wenigstens 0,1 % höher als der der oben erwähnte Zusammensetzung (1) ist, auf das gehärtete Produkt davon aufgebracht und durch Erwärmen gehärtet wird, wonach die oben erwähnte Zusammensetzung (1) auf das **dadurch** gehärtete Produkt aufgebracht und durch Erwärmen gehärtet wird.

10. Verfahren zur Herstellung eines Lichtwellenleiters, wobei die härtbare Organopolysiloxanharzzusammensetzung wie in einem der Ansprüche 1 bis 3 definiert in eine Form mit der gewünschten inneren Oberflächengestalt gegossen und durch Erwärmen gehärtet wird.

11. Verfahren zur Herstellung eines Lichtwellenleiters, worin
- eine erste härtbare Organopolysiloxanharzzusammensetzung wie in einem der Ansprüche 1 bis 3 definiert in eine Form gegossen wird, die auf ihrer inneren Oberfläche Vorsprünge aufweist, die dem Kern entsprechen, und durch Erwärmen gehärtet wird,
- der Formkörper aus der Form entfernt wird,
- eine zweite härtbare Organopolysiloxanharzzusammensetzung gemäß einem der Ansprüche 1 bis 3, deren gehärtetes Produkt einen Brechungsindex aufweist, der wenigstens 0,1 % höher ist als der der ersten Zusammensetzung, in den hohlen Teil des gehärteten Produkts, das aus der Form entfernt wurde, gegossen und durch Erwärmen gehärtet wird, wonach
- eine Zusammensetzung gemäß dieser ersten Zusammensetzung auf das gehärtete Produkt dieser zweiten Zusammensetzung und das gehärtete Produkt dieser ersten Zusammensetzung aufgebracht und durch Erwärmen gehärtet wird.

## Revendications

1. Guide d'ondes optique comprenant un produit durci par hydrosilation d'une composition de résine d'organopolysiloxane durcissable comprenant
(A) une résine d'organopolysiloxane, qui est représentée par la formule unitaire moyenne (1) :
(R¹₃SiO_{1/2})ₐ(R²₂SiO_{2/2})_{b}(R³SiO_{3/2})_{c}(SiO_{4/2})_{d} (1)
(dans laquelle R¹, R², et R³ représentent un, deux ou plusieurs types de groupes hydrocarbures monovalents choisis parmi les groupes hydrocarbures aliphatiques monovalents ayant de 1 à 6 atomes de carbone et les groupes hydrocarbures aromatiques monovalents ayant de 6 à 10 atomes de carbone, 0<a≤0,5, 0≤b<0,2, 0,3≤c<1, 0≤d≤0,4, 0≤(b+d)/(a+c)≤0,25, et a+b+c+d=1) et possède trois groupes hydrocarbures aliphatiques insaturés monovalents ou davantage par molécule, avec pas moins de 10 % en mole des groupes hydrocarbures monovalents étant des groupes hydrocarbures aromatiques monovalents,
(B) un composé organosilicié ayant deux ou plusieurs atomes d'hydrogène liés au silicium par molécule, avec pas moins de 5 % en mole de tous les groupes substituants monovalents liés au silicium étant des groupes hydrocarbures aromatiques monovalents, et
(C) un catalyseur d'hydrosilation.

2. Guide d'ondes optique selon la revendication 1, dans lequel la viscosité de la composition de résine d'organopolysiloxane durcissable n'est pas supérieure à 1x10⁷ mPa.s à 25°C.

3. Guide d'ondes optique selon la revendication 1, dans lequel la composition de résine d'organopolysiloxane durcissable comprend en outre (D) (d1) un solvant ou (d2) un diluant à base d'organosiloxane réagissant par hydrosilation.

4. Guide d'ondes optique selon l'une quelconque des revendications 1 à 3, dans lequel l'enveloppe et le coeur du guide d'ondes optique sont tous deux constitués par un produit durci par hydrosilation de composant (A) et de composant (B), l'indice de réfraction du coeur étant au moins 0,1% supérieur à l'indice de réfraction de l'enveloppe.

5. Guide d'ondes optique selon la revendication 4, dans lequel la différence d'indice de réfraction est régulée en faisant en sorte que la quantité totale des groupes hydrocarbures aromatiques monovalents dans le composant (A) et le composant (B) utilisés pour le coeur soit supérieure à la quantité totale des groupes hydrocarbures aromatiques monovalents dans le composant (A) et le composant (B) utilisés pour l'enveloppe.

6. Guide d'ondes optique selon l'une quelconque des revendications 1 à 5, qui se présente sous la forme d'un film.

7. Procédé de fabrication d'un guide d'ondes optique, dans lequel la composition de résine d'organopolysiloxane durcissable selon l'une quelconque des revendications 1 à 3 est durcie par chauffage.

8. Procédé de fabrication d'un guide d'ondes optique, dans lequel la composition de résine d'organopolysiloxane durcissable selon l'une quelconque des revendications 1 à 3 est appliquée sur un substrat et est durcie par chauffage.

9. Procédé de fabrication d'un guide d'ondes optique en forme de plaque, dans lequel une composition de résine d'organopolysiloxane durcissable pour guides d'ondes optiques (1) selon l'une quelconque des revendications 1 à 3 est appliquée sur un substrat et est durcie par chauffage, une composition de résine d'organopolysiloxane durcissable pour guides d'ondes optiques (2), dont le produit durci présente un indice de réfraction au moins 0,1% supérieur à celui de la composition (1) mentionnée ci-dessus, est appliquée sur le produit durci de celle-ci et est durcie par chauffage, moyennant quoi la composition (1) mentionnée ci-dessus est appliquée sur le produit durci de celle-ci et est durcie par chauffage.

10. Procédé de fabrication d'un guide d'ondes optique, dans lequel la composition de résine d'organopolysiloxane durcissable selon l'une quelconque des revendications 1 à 3 est coulée dans un moule ayant une surface interne d'une forme souhaitée et est durcie par chauffage.

11. Procédé de fabrication d'un guide d'ondes optique, dans lequel
- une première composition de résine d'organopolysiloxane durcissable selon l'une quelconque des revendications 1 à 3 est coulée dans un moule présentant, sur sa surface interne, des protubérances correspondant au coeur et est durcie par chauffage,
- la pièce moulée est retirée du moule,
- une deuxième composition de résine d'organopolysiloxane durcissable selon l'une quelconque des revendications 1 à 3, dont le produit durci présente un indice de réfraction au moins 0,1% supérieur à celui de la première composition, est coulée dans la partie creuse du produit durci retiré du moule et est durcie par chauffage, moyennant quoi
- une composition selon ladite première composition est appliquée au-dessus du produit durci de ladite deuxième composition et du produit durci de ladite première composition et est durcie par chauffage.
